# FASCICULE DE BREVET EUROPEEN

(11) **EP 0 862 978 B1**
(45) Date de publication et mention de la délivrance du brevet: **04.09.2002**
(21) Numéro de dépôt: 98400520.7
(22) Date de dépôt: 05.03.1998
(51) Int. Cl.: B29C 43/32, B29C 33/52, B29C 70/44

(54) **Procédé de fabrication de pièces creuses en matériau composite**
Verfahren zur Herstellung von Hohlkörpern aus Verbundmaterial
Method of manufacturing hollow articles from a composite material

(30) Priorité: 06.03.1997 FR 9702664
(43) Date de publication de la demande: 09.09.1998
(73) Titulaire: HUREL-HISPANO LE HAVRE, 76700 Harfleur (FR)
(72) Inventeur: Marchant, Pascal Eric Jean, 76610 - Le Havre (FR)
(74) Mandataire: Berrou, Paul

(56) Documents cités:
- DE-A- 3 820 574
- FR-A- 2 440 831
- FR-A- 2 562 834
- GB-A- 1 050 562
- GB-A- 2 173 144
- US-A- 3 795 559
- US-A- 4 167 430
- US-A- 4 681 724
- US-A- 4 812 115

## Description

L'invention se rapporte aux procédés de fabrication de pièces creuses en matériau composite stratifié comportant des nappes de fibres de renfort noyées dans une résine polymérisée à chaud, et plus particulièrement aux procédés de fabrication utilisant des noyaux pour former les cavités des pièces.

L'invention se rapporte aussi à un procédé de fabrication de telles pièces creuses dont les parois enveloppantes entourant les cavités sont adjacentes à des parois non enveloppantes ne formant pas de cavités.

Les pièces en matériau composite stratifié comportant des nappes de fibres de renfort noyées dans une résine polymérisable à chaud sont utilisées notamment dans les industries aéronautiques, spatiales ou automobiles pour leur excellent rapport résistance/masse. Les fibres de renfort sont habituellement des fibres de carbone ou de carbure de silicium, et les résines du type époxyde, bismaléimide ou polyimide. On cherche plus particulièrement à fabriquer des pièces creuses comme des réservoirs, des canalisations, des collecteurs d'air etc... avec des exigences de qualité de la matière les composant, d'état de surface, de résistance mécanique et thermique, et de précision dimensionnelle élevées. Ces pièces comportent des parois minces enveloppantes c'est à dire entourant et formant des cavités, ces cavités communiquant avec l'extérieur par des ouvertures pouvant être très petites. On cherche aussi à fabriquer de telles pièces dont les parois enveloppantes sont adjacentes à des parois non enveloppantes, c'est à dire ne formant pas de cavités. Ce peut être le cas par exemple un carter comportant à sa surface un collecteur d'air.

Un procédé bien connu pour réaliser des pièces creuses en matériau composite stratifié fibre-résine utilise un moule à la forme extérieure de la pièce, ce moule étant habituellement au moins en deux parties pour démouler la pièce, ce procédé comportant notamment les opérations essentielles suivantes :
- réalisation d'un noyau à la forme de la cavité de la pièce,
- mise en place d'une vessie gonflable autour du noyau,
- drapage du noyau, c'est à dire disposition autour de l'ensemble noyau + vessie de nappes de fibres de renfort pré-imprégnées de résine constituant la matière composite,
- disposition de l'ensemble noyau + vessie + matière composite ainsi constitué dans le moule,
- polymérisation à chaud de la résine, la vessie étant mise en pression,
- démoulage à chaud et refroidissement de la pièce,
- retrait du noyau,
- retrait de la vessie par l'ouverture de la cavité.

Le noyau peut être fusible à une température inférieure à la température du début de polymérisation de la résine, par exemple en paraffine ou en cire. Ce noyau est alors évacué par fusion après le drapage. On connaît aussi des noyaux en résine soluble dans un solvant organique, le noyau étant évacué de la cavité par dissolution après le démoulage et le refroidissement de la pièce. Cette solution présente cependant l'inconvénient d'attaquer la résine de la pièce, ce qui nuit à la qualité des surface et à la résistance de la pièce. On connaît aussi des noyaux de céramique solubles dans l'eau, cette dernière solution semblant la plus appropriée dans le cas présent. La mise en pression de la vessie permet de repousser et de comprimer la matière composite contre la paroi du moule et de réduire le foisonnement naturel des nappes de fibres pré-imprégnées. On appelle ici foisonnement l'épaisseur supplémentaire des nappes de fibres pré-imprégnées avant compression. On obtient ainsi un matériau homogène exempt de micro-cavités entre les fibres. Les pressions habituellement utilisées sont de l'ordre de 8 à 15 bars, l'épaisseur de la matière composite se trouvant ainsi réduite de 15% à 30%. Il s'agit donc d'une densification.

Cette technique présente intrinsèquement les inconvénients suivants :
1) Les surfaces intérieures sont rugueuses et peu précises, car la vessie sous pression suit les inégalités de drapage. De plus, la vessie repousse mal la matière composite dans les angles rentrants, et la pièce reste en conséquence imprécise dans ces endroits.
2) Le retrait de la vessie après le moulage peut s'avérer difficile lorsque la cavité est de taille importante et l'ouverture petite, ce qui impose au concepteur de donner des dimensions suffisantes aux ouvertures.
3) La vessie doit rester en parfait état, c'est à dire qu'elle doit conserver son étanchéité et sa souplesse tant que la résine n'a pas atteint la température à laquelle elle se solidifie par polymérisation. Le problème est que certaines résines à haute tenue en température, telles les polyimides, ont des températures de solidification par polymérisation supérieures à 300°C, et l'inventeur ne connaît pas d'élastomère permettant de fabriquer des vessies résistant à cette température. Le procédé n'est en conséquence plus utilisable avec de telles résines.

Les pièces constituées de parois minces non enveloppantes, c'est à dire ne formant pas de cavités, sont habituellement fabriquées par la technique de moulage dite "en sac" qui utilise un moule ouvert à la forme de la paroi, ou plus exactement de l'une des deux surfaces de ladite paroi, le procédé comportant notamment les opérations suivantes :
- drapage, c'est à dire application des nappes de fibres imprégnées de résine sur le moule, pour constituer la matière composite,
- recouvrement de la matière composite par un film imperméable étanché par rapport au moule, l'homme du métier ayant auparavant disposé un drain connecté à une source de dépression d'air, ainsi que différents tissus favorisant le drainage et le démoulage, ces technique étant rappelées pour mémoire et n'ayant pas d'incidence sur la mise en oeuvre de l'invention,
- polymérisation à chaud en autoclave aux conditions de température et de pression requises, la pression de l'autoclave venant plaquer la matière composite par l'intermédiaire du film contre la surface du moule, afin de la densifier et de lui donner la forme requise.

La technique de moulage "en sac" ne peut cependant pas être combinée à la technique de moulage avec une vessie pour constituer en un seul bloc une pièce comportant au moins une première partie creuse relevant de la technique de moulage avec une vessie, ainsi qu'au moins une paroi mince ne formant pas de cavité et relevant de la technique de moulage "en sac". En effet, au moins une partie de la paroi enveloppante formant la cavité se trouvera simultanément entre le sac et la vessie, c'est à dire entre deux membranes souples soumises à pression, cette partie de la paroi prenant une forme aléatoire, 5 même en cas d'équilibre rigoureux entre les pressions exercées sur le sac et sur la vessie, par exemple par une mise en communication du sac et de la vessie. Il est en conséquence impossible de garantir la géométrie d'une telle pièce.

On connaît par le brevet FR 2 562 834, sur lequel repose le préambule des présentes revendications indépendantes, un procédé de moulage de pièces creuses en matériau composite mettant en oeuvre un noyau à deux composants, soit une âme entourée d'une enveloppe externe, l'âme étant en métal ou en résine armée de fibre de verre ou en béton de résine, l'enveloppe externe étant en caoutchouc de silicone. Le coefficient de dilatation thermique du caoutchouc silicone étant très élevé, un tel procédé permet d'exercer une compression centrifuge sur la matière composite pendant la polymérisation. Ce procédé présente cependant l'inconvénient de n'être applicable qu'aux pièces creuses dont l'ouverture est suffisamment grande pour pouvoir y faire passer le noyau dans sa forme d'origine afin de le retirer de la pièce à la fin du moulage. Ce brevet donne d'ailleurs un exemple détaillé de réalisation portant sur le moulage d'une aile de planeur, cette pièce ayant une forme sensiblement tronconique ouverte à la base qui permet de retirer le noyau à la fin du moulage.

L'invention propose un procédé de fabrication de pièces creuses en matériau composite fibre-résine polymérisable à chaud tel que défini dans la revendication 1.

Ainsi, l'élastomère silicone se désagrégera pendant la polymérisation de la résine et pourra ensuite être facilement enlevée des cavités de la pièce par exemple par un lavage au jet d'eau.

Le procédé selon l'invention permet aussi de polymériser des pièces à des températures supérieures aux températures d'utilisation normales des élastomères silicone, ce qui remédie au troisième inconvénient du moulage avec vessie.

L'élastomère silicone est habituellement utilisé comme joint d'étanchéité. L'invention exploite une propriété particulière de ce matériau, à savoir un coefficient de dilatation thermique très élevé atteignant 1000.10-⁶/°C. Au contraire des noyaux entourés d'une vessie mise en pression, les noyaux bi-composants conformes à l'invention se dilatent sous-l'effet de la chaleur à la façon d'un corps solide et transmettent en conséquence leur forme à la matière composite qu'ils compriment contre la surface du moule.

Les surfaces intérieures ainsi obtenues sont régulières et précises, car elles dépendent des noyaux et non des drapages. Les angles rentrants sont facilement formés, car les noyaux à qui on aura donné une forme complémentaire à celle du moule pénétreront dans les angles rentrants et y repousseront la matière composite 5 contre les surfaces intérieures du moule à la façon d'un coin.

On comprend qu'un tel résultat est rendu possible grâce au coefficient de dilatation thermique très élevé de l'élastomère silicone. Connaissant les dimensions L1 et l'épaisseur des parois de la pièce finie, la réduction de l'épaisseur des parois à effectuer pendant la polymérisation, la température T1 de polymérisation ainsi que les coefficients de dilatation thermique des matériaux composant la couche d'élastomère silicone et l'âme du noyau, le moule et la matière composite à l'état polymérisé, soit respectivement α1, α2, α3 et α4, l'homme du métier en déduira très simplement les dimensions L2 des noyaux et les épaisseurs e des couches d'élastomère silicone constituant la périphérie desdits noyaux. Le plus souvent, α4 est très faible et pourra être négligé. La compression selon l'invention de la matière composite se faisant à volume déterminé, et non à pression déterminée selon le moulage "avec vessie", l'homme du métier déterminera par des expérimentations la réduction de l'épaisseur de la paroi à obtenir. Pour une bonne qualité de la matière composite, cette réduction devrait être au moins égale à 30 % de l'épaisseur de la matière composite avant compression. Ce taux de compression peut être abaissé si les parois de la pièce sont préalablement compactées avant la polymérisation, par exemple sous vide. Toutefois dans ce cas, il est souhaitable de maintenir, par les moyens de l'invention, un taux de compression qui soit au moins égal à 15 % de l'épaisseur de la matière composite, afin de conserver la qualité du résultat obtenu.

L'invention présente l'avantage de permettre une introduction facile des noyaux à froid, sans froisser les fibres de renfort de la pièce à obtenir.

L'effet de compression obtenu par les noyaux de l'invention exigent une épaisseur e de la couche d'élastomère silicone au moins égale à 3 mm, avec un coefficient de dilatation thermique au moins égal à 1000.10⁻⁶°C. Cette épaisseur ne devrait toutefois pas excéder 10 à 15 mn, car l'élastomère se comporterait alors comme un fluide et donnerait des surfaces irrégulières. De plus des phénomènes chimiques tels des dégagements d'huile seraient susceptibles d'apparaître pendant la polymérisation.

La dureté de l'élastomère silicone n'est pas critique. Elle devrait toutefois être au moins égale à 45 shores afin d'améliorer la régularité des surfaces obtenues.

Avantageusement, l'âme sera réalisée en céramique soluble à l'eau, afin de pouvoir la retirer facilement des cavités de la pièce par une simple dissolution à l'eau, sans altérer la matière de la pièce finie. Un autre avantage de l'invention est de permettre l'enlèvement du noyau par une opération unique de lavage.

Par ailleurs, l'élastomère silicone entourant le noyau soluble a aussi pour effet de créer en fin de cycle de polymérisation un espace entourant ledit noyau soluble dans la cavité de la pièce, et pour résultat d'accélérer l'élimination par dissolution du noyau, car le solvant peut alors entourer complètement le noyau dès le début de la dissolution. Ce résultat est conservé même quand la cavité ainsi formée n'a qu'une ouverture très petite sur l'extérieur.

Avantageusement enfin, les pièces pourront être moulées sans prévoir d'ouverture entre les cavités et l'extérieur, c'est à dire dans les parois enveloppantes, ce qui en simplifie la réalisation. Pour enlever les noyaux des cavités des pièces, il suffira après le moulage de la pièce de percer un trou dans chaque cavité d'enlever par dissolution à l'eau l'âme du noyau et d'enlever au jet d'eau la couche d'élastomère silicone désagrégée, ce trou pouvant être de dimension réduite.

Une difficulté se présente pour réaliser les noyaux, l'épaisseur de la couche d'élastomère silicone entourant l'âme d'un noyau devant être assurée avec précision en tout point de la surface du noyau, cette épaisseur pouvant être différente d'un point à un autre du noyau.

Ainsi, le procédé selon l'invention se combine avantageusement avec la fabrication des noyaux en utilisant un moule à la forme extérieure de chaque noyau et en procédant de la façon suivante :
- fabrication de l'âme du noyau,
- mise en place de l'âme dans le moule, des cales d'épaisseur en élastomère silicone réticulé, c'est à dire polymérisé, étant disposées entre l'âme et les parois du moule, chaque cale ayant l'épaisseur de la couche d'élastomère silicone à obtenir à cet endroit,
- coulée d'élastomère silicone liquide dans l'espace laissé libre entre le noyau et la paroi du moule,
- réticulation à froid de l'élastomère silicone et démoulage.

On utilisera avantageusement une silicone dite "rechargeable". Ainsi pendant la réticulation, des liaisons chimiques se forment entre les cales d'élastomère silicone déjà réticulée et l'élastomère silicone en cours de réticulation. La couche d'élastomère silicone obtenue est donc parfaitement homogène dans sa structure et ses caractéristiques thermiques et mécaniques.

Un autre avantage de l'invention est en conséquence la simplicité et le moindre coût de fabrication des noyaux comparés à l'ensemble noyau + vessie de l'art antérieur.

L'invention propose aussi un procédé de fabrication de pièces complexes en matériau composite fibre-résine polymérisable à chaud tel que défini dans la revendication indépendante 8.

Ainsi, l'élastomère silicone se désagrégera pendant la polymérisation de la résine et pourra ensuite être facilement enlevée des cavités de la pièce par exemple par un lavage au jet d'eau.

Le procédé selon l'invention permet aussi de polymériser des pièces à des températures supérieures aux températures d'utilisation normales des élastomères silicone, ce qui remédie au troisième inconvénient du moulage avec vessie.

Ainsi, toutes les parois de telles pièces se trouvent densifiées et mises en forme soit entre deux surfaces solides, à savoir celles du moule et des noyaux, soit contré une surface solide sous l'effet de la pression de l'autoclave exercée sur le film.

Avantageusement, les noyaux seront eux-mêmes drapés par au moins une nappe de fibre pré-imprégnées de résine, afin d'augmenter la résistance de la pièce à la fissuration par l'intérieur des cavités dans les zones où les parois non enveloppantes sont adjacentes aux parois enveloppantes.

Les perfectionnements déja proposés pour fabriquer les pièces creuses simples sont applicables dans les mêmes conditions aux parties creuses des pièces complexes.

L'invention sera mieux comprise et les avantages qu'elle procure apparaîtront plus clairement au vu de deux exemples de réalisation donnés à titre non exclusifs et des figures annexées.

La figure 1 illustre le moulage d'une pièce creuse conformément à l'invention, un réservoir en l'espèce, les épaisseurs des parois et de la couche d'élastomère silicone ayant été augmentées par mesure de clarté.

La figure 2 illustre le moulage d'un noyau conformément à l'invention, l'épaisseur des cales ayant été augmentée par mesure de clarté.

La figure 3 illustre le moulage d'une pièce complexe comportant une partie creuse adjacente à des parois non enveloppantes, en l'espèce un carter de turbomachine avec un collecteur d'air, les épaisseurs des parois et de la couche d'élastomère silicone ayant été augmentées par mesure de clarté.

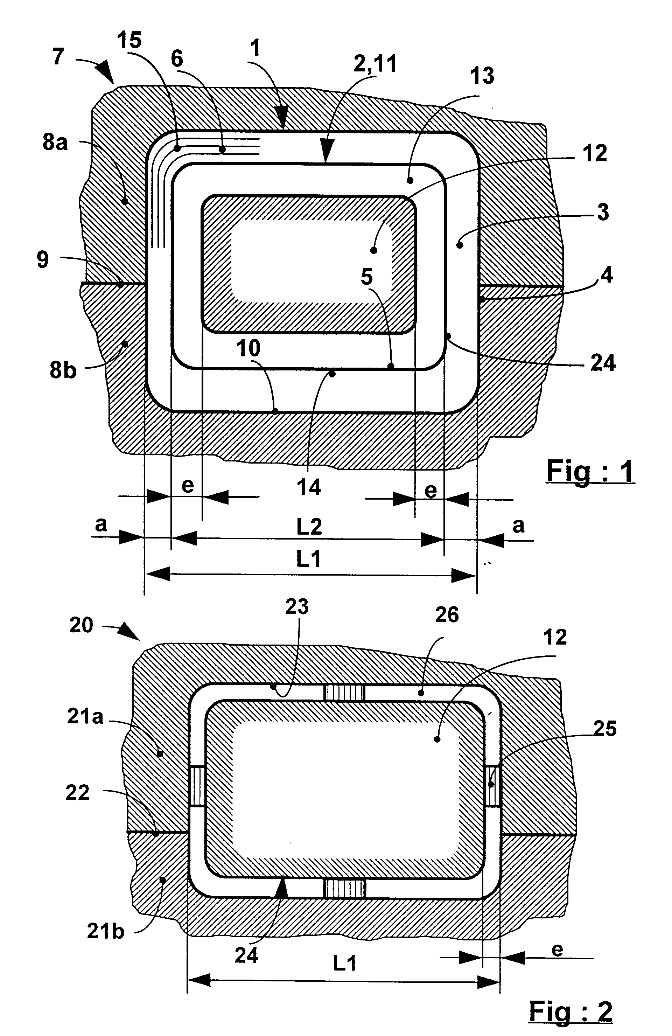

On se reportera en premier lieu à la figure 1. La pièce 1 est dans cet exemple un réservoir comportant une cavité 2 formée par une paroi enveloppante 3, ladite paroi enveloppante 3 ayant une surface extérieure 4 ainsi qu'une surface intérieure 5 délimitant la cavité 2, ladite paroi enveloppante 3 étant constituée d'une matière composite 6 faite de fibres de renfort noyées dans une matrice de résine polymérisable à chaud. Le moule 7 est dans cet exemple constitué de deux demi-coquilles 8a et 8b séparées par le plan de joint 9. Le moule comporte une surface de formage intérieure 10 complémentaire de la surface extérieure 4 de la pièce 1 à mouler. Le noyau 11 occupe le volume de la cavité 2 et comporte une âme 12 en céramique soluble à l'eau, cette âme 12 étant recouverte d'une couche d'élastomère silicone 13 dont la surface extérieure 14 est complémentaire de la surface intérieure 5 de la paroi enveloppante 3. La couche d'élastomère silicone 13 est choisie pour avoir une température de désagrégation T inférieure à la température T1 de durcissement de la résine.

Le moule 7 étant réalisé en alliage métallique et étant de ce fait réutilisable, la pièce 1 est fabriquée de la façon suivante :
- fabrication du noyau 11,
- drapage du noyau 11, c'est à dire application de couches de fibres pré-imprégnées de résine sur le noyau 11 afin de constituer la matière composite 6,
- introduction de l'ensemble noyau 11 + matière composite 6 dans le moule 7,
- exécution du cycle thermique de polymérisation à chaud de la résine, démoulage et refroidissement,
- perçage d'un trou non représenté dans la paroi enveloppante 3, et enlèvement du noyau 11, l'âme 12 étant dissoute et enlevée par lavage à l'eau, et la couche d'élastomère silicone 13 désagrégée étant éliminée par ce même lavage à l'eau.

Les cycles thermiques et les techniques particulières permettant d'éliminer les composants gazeux et liquides susceptibles de se former pendant la polymérisation sont bien connus de l'homme du métier et ne seront pas rappelés afin de ne pas alourdir inutilement cet exposé.

Pendant le cycle de polymérisation, la température de l'ensemble moule 7 + matière composite 6 + noyau 11 passe progressivement de la température ambiante, soit 25°C, à la température T₁ finale de durcissement de la résine. La couche d'élastomère silicone 13 dont le coefficient de dilatation thermique α₁ est très supérieur aux coefficients de dilatation thermique de l'âme 12 et du moule 7, soient respectivement α₂ et α₃, et dont l'épaisseur e est suffisante, se dilate sous l'effet de l'élévation de la température et repousse par sa surface extérieure 14 la matière composite 6 contre la surface intérieure 10 du moule 7, ce qui réduit le foisonnement des couches de fibre et de résine, chasse les bulles d'air emprisonnées entre les couches ainsi que les dégagements de composants gazeux et provoque la densification de la matière composite 6. La couche d'élastomère silicone 13 se dilate sensiblement à la façon d'un corps solide et imprime sa forme dans la matière composite 6. Ainsi, le noyau 11 peut plaquer régulièrement la matière composite 6 contre la surface intérieure 10 du moule 7 et tendre les fibres de renfort de ladite matière composite 6 même dans les angles rentrants 15 de la pièce 1, ce qui ne peut être réalisé correctement par le moulage avec vessie de l'art antérieur.

Dans cet exemple, on a réalisé une pièce de largeur L₁ = 75mm comportant 7 nappes ou "plis" de tissus préimprégné de résine formant après drapage une épaisseur a = 3,15mm et après compression et polymérisation une épaisseur a' = 2,31mm, ce qui représente un taux de compression égal à 28 %. La résine étant polymérisée par une montée progressive jusqu'à la température T1 = 320°C, ce qui représente avec la température ambiante un écart T = 295°C, la pièce est réalisée avec les modalités suivantes :
- moule en acier de coefficient de dilatation thermique α3 = 12.10⁻⁶/°C,
- noyau de largeur L₂ = 68,70mm,
- âme en céramique soluble à l'eau "CERAMCOR 316" (marque commerciale de la société Ceramic Core Systems Ltd). de coefficient de dilatation thermique α₂ = 70.10⁻⁶/°C et de la largeur L₃ = 60,94mm,
- couche d'élastomère silicone "RTV141" (référence de la société Rhodorsil) de coefficient de dilatation thermique α1 = 300.10⁻⁶ et d'épaisseur e = 3,88 mm de chaque côté du noyau, cet élastomère silicone se désagrégeant vers 300°C

On se reportera maintenant à la figure 2. Le noyau 11 est fabriqué selon le procédé suivant :
- utilisation d'un moule 20 en deux demi-coquilles 21a, 21b séparées par un plan de joint 22 et dont la surface intérieure 23 est complémentaire à la surface extérieure référencée 14 sur la figure 1,
- fabrication de l'âme 12 en céramique soluble à l'eau selon le procédé habituel,
- disposition de l'âme 12 dans le moule 20, des cales 25 en élastomère silicone d'épaisseur e étant disposées entre la surface extérieure 24 de l'âme 12 et la surface intérieure 23 du moule 20 afin de positionner l'âme 12 dans le moule 20 et de définir un espace 26 à la forme exacte de la couche d'élastomère silicone référencée 13 sur la figure 1, les cales 25 étant en pratique collées à la surface 24 de l'âme 12,
- coulée de l'élastomère silicone liquide dans l'espace 26, polymérisation et démoulage du noyau.

On remarquera que ces noyaux peuvent être stockés sans précautions particulières, la couche d'élastomère silicone protégeant l'âme de céramique plus fragile.

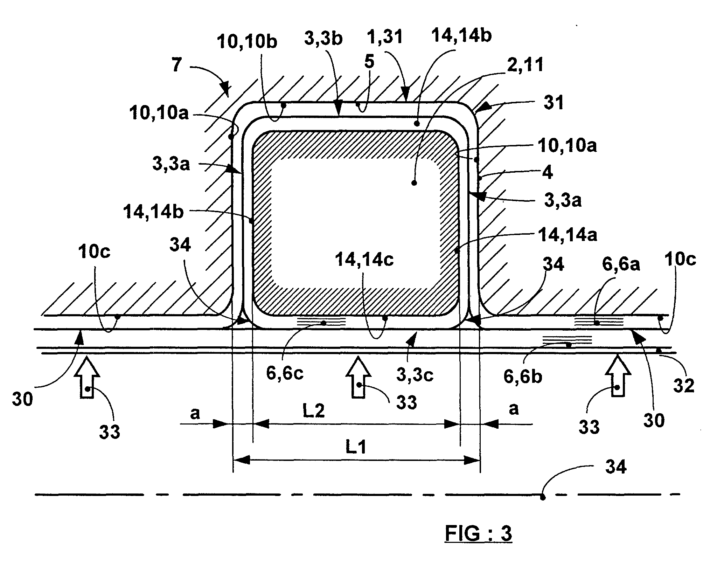

On se reportera maintenant à la figure 3. La pièce 1 comporte dans cet exemple une paroi enveloppante 3 formant la cavité 2, ainsi que deux parois non enveloppantes 30 adjacentes à la paroi enveloppante 3. Dans cet exemple, le moule 7 est en une seule pièce, et sa surface de formage 10 comporte une empreinte 31 à la forme de la paroi enveloppante 3. La surface 10 se subdivise en deux surfaces latérales 10a en regard l'une de l'autre et en un fond 10b, les surfaces 10a et 10b formant l'empreinte 31, et en les surfaces 10c à la forme des parois non enveloppantes 30. Le noyau 11 ayant été réalisé comme précédemment à la forme de la cavité 2, de la pièce 1 est fabriquée comme suit :
- application d'au moins une nappe de fibre pré-imprégnée de résine contre la surface 10, 10a, 10b, 10c du moule 1, afin de former une première couche de matière composite 6a,
- mise en place du noyau 11 à l'emplacement de la cavité 2 dans l'empreinte 31,
- application d'au moins une nappe de fibre pré-imprégnée de résine sur le noyau 11 et la première couche de matière composite 6a, afin de former une seconde couche de matière composite 6b constituant avec la couche de matière composite 6a les parois enveloppantes 3 et les parois non enveloppantes 30 de la pièce 1,
- recouvrement par un film imperméable 32 étanché sur les bords de la pièce non représentés par rapport au moule 7,
- mise en autoclave et polymérisation de la résine aux conditions de température et de pression (33) requises pour la résine employée.

Les noyaux 11 peuvent aussi être drapés avec au moins une nappe de fibre pré-imprégnée afin de former une couche de matière composite 6c tapissant complètement les cavités et renforçant la résistance à la fissuration de la pièce 1 dans les zones 34 où les parois non enveloppantes 30 sont adjacentes aux parois enveloppantes 3,3a,3b,3c.
Sous l'effet de la montée en température pendant la polymérisation, le noyau 11 conforme à l'invention se dilate et comprime les parties latérales 3a des parois enveloppantes 3 contre les surfaces latérales 10a du moule 7, dans les conditions développées dans le premier exemple.

Sous l'effet de la pression 33 exercée sur le film 32 par l'autoclave pendant la polymérisation :
- les parois non enveloppantes 30 sont densifiées et formées contre la surface 10c du moule 7,
- le noyau 11 est poussé vers le fond de l'empreinte 31, ce qui permet de densifier et de former la portion 3b de la paroi enveloppante 3 entre le fond 10b de l'empreinte 31 et la surface 14b du noyau 11 située en regard,
- la portion 3c de la paroi enveloppante est densifiée et formée contre la surface 14c du noyau 11 située en regard.

Dans le cas où la portion de paroi enveloppante 3c est en saillie par rapport à la paroi non enveloppante 30, la dilatation thermique du noyau 11 conforme à l'invention présente aussi l'avantage de retendre les fibres de la matière composite, et ainsi de résorber les plissements de ces fibres qui se formeraient inévitablement sous l'effet de la pression de l'autoclave 33, ces plissements ayant eux-mêmes pour effet de réduire la résistance de la paroi 3c en composite.

L'invention n'est pas limitée aux réalisations décrites, mais en couvre au contraire les variantes qui pourraient leur être apportées sans sortir du cadre défini par les revendications.

Ainsi, un noyau 11 peut être réalisé en plusieurs pièces qui seront ensuite disposées les unes contre les autres, avec d'éventuels moyens de positionnement relatif et de liaison entre elles, pour former des cavités de forme complexe ou s'éloignant par trop des formes sphériques ou cubiques. Par exemple, le carter 1 selon le second exemple de mise en oeuvre du procédé peut avoir une forme annulaire autour de l'axe géométrique 34, la cavité 2 prenant alors une forme torique autour de ce même axe géométrique 34. Le noyau 11 sera alors avantageusement composé de plusieurs segments disposés séparément dans l'empreinte du moule.

Selon l'effet recherché, les plans de joint entre les segments pourront ou non être revêtus d'élastomère silicone. On remarquera que la dilatation de l'élastomère silicone comblera les inévitables espaces se formant à la surface du noyau au niveau les plans de joint desdits noyaux, ce qui ne laissera que des traces très petites à la surface de la cavité.

## Revendications

1. Procédé de fabrication de pièces creuses en matériau composite fibre-résine polymérisable à chaud, lesdites pièces (1) étant constituées de parois enveloppantes (3) entourant et formant des cavités (2), ledit procédé utilisant un moule (7) à la forme extérieure de la pièce (1) et comportant notamment les opérations suivantes :
- fabrication d'un noyau (11) à la forme de chaque cavité (2),
- drapage des noyaux (11) avec au moins une nappe de fibre pré-imprégnée de résine pour constituer la matière composite (6) de la pièce (1),
- mise de l'ensemble noyau (11) + matière composite (6)dans le moule (7),
- polymérisation à chaud de la résine, lesdits noyaux (11) exerçant sur la matière composite (6) une compression centrifuge produite par dilatation thermique pendant la polymérisation de la résine, lesdits noyaux (11) comportant une âme (12) revêtue d'une couche d'élastomère silicone (13) à fort coefficient de dilatation thermique α et d'épaisseur e appropriée,
**caractérisé en ce que** la couche d'élastomère silicone (13) a une température T de désagrégation inférieure à la température T₁ de durcissement de la résine, afin de désagréger la couche d'élastomère silicone (13) pendant la polymérisation de la résine.

2. Procédé selon la revendication 1, **caractérisé en ce que** la compression centrifuge est au moins égale à 30% de l'épaisseur a de la matière composite (6) avant compression.

3. Procédé selon la revendication 1, **caractérisé en ce que** la couche d'élastomère silicone (13) a une épaisseur e au moins égale à 3mm et un coefficient de dilatation thermique α au moins égal à 1000.10⁻⁶/°C.

4. Procédé selon l'une quelconque des revendications 1 à 3, **caractérisé en ce que** l'âme (12) des noyaux (11) est réalisée en matériau soluble à l'eau, afin d'autoriser son enlèvement des cavités (2) par dissolution à l'eau.

5. Procédé selon la revendication 4 **caractérisé en ce que** la pièce (1) est moulée sans ouverture dans les parois enveloppantes, pour simplifier le drapage et le moulage.

6. Procédé selon la revendication 5 **caractérisé en ce que** les parois enveloppantes (3) sont percées après le moulage, pour permettre l'élimination des noyaux (11) par lavage.

7. Procédé selon l'une quelconque des revendications 1 à 6 **caractérisé en ce qu'**on utilise un moule (20) à la forme et aux dimensions du noyau (11) à froid, et **en ce que** la fabrication du noyau (11) comporte les opérations suivantes :
- fabrication de l'âme (12),
- mise en place de l'âme (12) dans le moule (20), des cales (25) en élastomère silicone réticulé étant disposées entre l'âme (12) et les parois (23) du moule (20), chaque cale (25) ayant l'épaisseur de la couche d'élastomère silicone (13) à obtenir à cet endroit,
- coulée d'élastomère silicone liquide dans l'espace (26) laissé libre,
- réticulation à froid de l'élastomère silicone et démoulage du noyau (11).

8. Procédé de fabrication de pièces complexes en matériau composite, lesdites pièces (1) étant constituées de parois enveloppantes (3, 3a, 3b, 3c) entourant et formant des cavités (2), lesdites parois enveloppantes (3) étant elles-mêmes adjacentes à des parois non enveloppantes (30), ledit procédé utilisant un moule (7) comportant des surfaces de formage (10c) à la forme des parois non enveloppantes (30), ledit moule (7) comportant aussi des empreintes (31) à la forme des parois enveloppantes (3a, 3b), ledit procédé comportant les opérations suivantes :
- drapage du moule (7) par au moins une nappe de fibre pré-imprégnée de résine constituant une première couche (6a) de matière composite,
- mise en place des noyaux (11) dans les empreintes (31), par dessus la première couche (6a) de matière composite,
- drapage de l'ensemble avec au moins une seconde nappe de fibre pré-imprégnée de résine afin de constituer une seconde couche de matière composite (6b),
- recouvrement de l'ensemble noyaux (11) + matière composite (6a, 6b), par un film imperméable (32) et étanche par rapport au moule (7),
- compression et polymérisation à chaud en autoclave,
lesdits noyaux (11) exercant sur la matière composite (6a) arrêtée par les surfaces latérales (10a) de l'empreinte (31) une compression centrifuge produite par sa dilatation thermique pendant la polymérisation de la résine, lesdits noyaux (11) étant constitués d'une âme (12) revêtue d'une couche d'élastomère silicone (13) à fort coefficient de dilatation thermique et d'épaisseur e appropriée,
**caractérisé en ce que** la couche d'élastomère silicone (13) a une température T de désagrégation inférieure à la température T1 de durcissement de la résine, afin de désagréger la couche d'élastomère silicone (13) pendant la polymérisation de la résine.

9. Procédé selon la revendication 8, **caractérisé en ce que** les noyaux (11) sont drapés par au moins une nappe de fibre pré-imprégnée de résine préalablement à la mise en place desdits noyaux (11) dans les empreintes (31) afin de former une couche de matière composite (6c) tapissant complètement les cavités.

10. Procédé selon la revendication 8, **caractérisé en ce que** la compression centrifuge est au moins égale à 30% de l'épaisseur a de la paroi enveloppante (3).

11. procédé selon la revendication 8, **caractérisé en ce que** la couche d'élastomère silicone (13) a une épaisseur e au moins égale à 3mm et un coefficient de dilatation thermique α au moins égal à 1000.10⁻⁶/°C.

12. Procédé selon l'une quelconque des revendications 8 à 11, **caractérisé en ce que** l'âme (12) des noyaux (11) est réalisée en matériau soluble à l'eau, afin d'autoriser son enlèvement des cavités (2) par dissolution à l'eau.

13. procédé selon la revendication 12 **caractérisé en ce que** la pièce (1) est moulée sans ouverture dans les parois enveloppantes (3, 3a, 3b, 3c), pour simplifier le drapage et le moulage.

14. Procédé selon la revendication 13 **caractérisé en ce que** les parois enveloppantes (3) sont percées après le moulage, pour permettre l'élimination des noyaux (11) par lavage.

15. Procédé selon l'une quelconque des revendications 8 à 14 **caractérisé en ce qu'**on utilise un moule (20) à la forme et aux dimensions du noyau (11) à froid, et **en ce que** la fabrication du noyau (11) comporte les opérations suivantes :
- fabrication de l'âme (12),
- mise en place de l'âme (12) dans le moule (20), des cales (25) en élastomère silicone réticulé étant disposées entre l'âme (12) et les parois (23) du moule (20), chaque cale (25) ayant l'épaisseur e de la couche d'élastomère silicone (13) à obtenir à cet endroit,
- coulée d'élastomère silicone liquide dans l'espace (26) laissé libre,
- réticulation à froid de l'élastomère silicone et démoulage du noyau (11).

## Patentansprüche

1. Verfahren zur Herstellung von Hohlkörper-Teilen aus warm polymerisierbarem Harz-Faser-Verbundmaterial, wobei diese Teile (1) aus umhüllenden Wänden (3) bestehen, die Hohlräume (2) umschließen und bilden, wobei in diesem Verfahren eine Gießform (7) mit der Außenform des Teils (1) verwendet wird, und das Verfahren insbesondere die folgenden Arbeitsschritte umfasst:
- Fertigung eines Kerns (11) in der Form des Hohlraums (2),
- Umkleiden der Kerne (11) mit mindestens einer harz-vorgetränkten Faserschicht, um das Verbundmaterial (6) des Teils (1) zu bilden,
- Einbringen der Gesamtanordnung des Kerns (11) und des Verbundmaterials (6) in die Gießform (7),
- Warmpolymerisation des Harzes, wobei die Kerne (11) auf das Verbundmaterial (6) einen Zentrifugaldruck ausüben, der durch die Wärmeausdehnung während der Polymerisation des Harzes entsteht, wobei die Kerne (11) ein Herzstück (12) aufweisen, das mit einer Silikonelastomerschicht (13) mit hohem Wärmeausdehnungskoeffizient α und von geeigneter Stärke e beschichtet ist,
**dadurch gekennzeichnet,**
**dass** die Auflösungstemperatur T der Silikonelastomerschicht (13) geringer ist als die Verfestigungstemperatur T₁ des Harzes, so dass die Silikonelastomerschicht (13) während der Polymerisation des Harzes aufgelöst wird.

2. Verfahren nach Anspruch 1,
**dadurch gekennzeichnet,**
**dass** der Zentrifugaldruck mindestens 30 % der Stärke a des Verbundmaterials (6) vor dem Zusammendrücken entspricht.

3. Verfahren nach Anspruch 1,
**dadurch gekennzeichnet,**
**dass** die Silikonelastomerschicht (13) eine Stärke e von mindestens 3 mm sowie einen Wärmeausdehnungskoeffizient α von mindestens 1000 •10⁻⁶/°C aufweist.

4. Verfahren nach einem der Ansprüche 1 bis 3,
**dadurch gekennzeichnet,**
**dass** das Herzstück (12) der Kerne (11) aus einem wasserlöslichen Material hergestellt ist, so dass es durch Auflösen mit Wasser aus den Hohlräumen (2) entfernt werden kann.

5. Verfahren nach Anspruch 4,
**dadurch gekennzeichnet,**
**dass** das Teil (1) ohne Öffnung in den umhüllenden Wänden geformt wird, um das Umkleiden und das Formen zu vereinfachen.

6. Verfahren nach Anspruch 5,
**dadurch gekennzeichnet,**
**dass** die umhüllenden Wände (3) nach dem Formen durchbohrt werden, um das Entfernen der Kerne (11) durch Ausspülen zu ermöglichen.

7. Verfahren nach einem der Ansprüche 1 bis 6,
**dadurch gekennzeichnet,**
**dass** eine Gießform (20) mit der Form und den Abmessungen des kalten Kerns (11) verwendet wird und dass die Herstellung des Kerns (11) folgende Arbeitsschritte umfasst:
- Fertigung des Herzstücks (12),
- Einbringen des Herzstücks (12) in die Form (20), wobei Beilagen (25) aus netzförmigem Silikonelastomer zwischen dem Herzstück (12) und den Wänden (23) der Form (20) angeordnet werden, wobei jede Beilage (25) die Dicke der an dieser Stelle herzustellenden Silikonelastomerschicht (13) aufweist,
- Gießen von flüssigem Silikonelastomer in den freigelassenen Zwischenraum (26),
- Kaltvernetzung des Silikonelastomers und Ausformen des Kerns (11).

8. Verfahren zur Herstellung von komplexen Teilen aus Verbundmaterial, wobei diese Teile (1) aus umhüllenden Wänden (3, 3a, 3b, 3c) bestehen, die Hohlräume (2) umschließen und bilden, wobei diese umhüllenden Wände (3) ihrerseits an nicht umhüllenden Wände (30) grenzen, wobei in diesem Verfahren eine Gießform (7) mit Formungsflächen (10c) in der Form der nicht umhüllenden Wände (30) verwendet wird, wobei diese Gießform (7) ferner Eindrücke (31) in der Form der umhüllenden Wände (3, 3b) aufweist, und wobei das Verfahren insbesondere die folgenden Arbeitsschritte umfasst:
- Umkleiden der Gießform (7) mit mindestens einer harz-vorgetränkten Faserschicht, die eine erste Verbundmaterialschicht (6a) bildet,
- Einbringen der Kerne (11) in die Eindrücke (31) über der ersten Verbundmaterialschicht (6a),
- Umkleiden der Gesamtanordnung mit mindestens einer zweiten harz-vorgetränkten Faserschicht, um eine zweite Verbundmaterialschicht (6b) zu bilden,
- Beschichten der Gesamtanordnung der Kerne (11) und des Verbundmaterials (6a, 6b) mit einem undurchlässigen Film (32), der zur Form (7) dicht ist,
- Zusammendrücken und Warmpolymerisation im Kessel,
wobei die Kerne (11) auf das Verbundmaterial (6a), das durch die Seitenflächen (10a) des Eindrucks (31) festgehalten wird, einen Zentrifugaldruck ausüben, der durch dessen Wärmeausdehnung während der Polymerisation des Harzes entsteht, wobei die Kerne (11) ein Herzstück (12) aufweisen, das mit einer Silikonelastomerschicht (13) mit hohem Wärmeausdehnungskoeffizient α und von geeigneter Stärke e beschichtet ist,
**dadurch gekennzeichnet,**
**dass** die Auflösungstemperatur T der Silikonelastomerschicht (13) geringer ist als die Verfestigungstemperatur T₁ des Harzes, so dass die Silikonelastomerschicht (13) während der Polymerisation des Harzes aufgelöst wird.

9. Verfahren nach Anspruch 8,
**dadurch gekennzeichnet,**
**dass** die Kerne (11) mit mindestens einer harz-vorgetränkten Faserschicht umkleidet werden, bevor diese Kerne (11) in die Eindrücke (31) eingebracht werden, um eine Verbundmaterialschicht (6c) zu bilden, die die Hohlräume gänzlich beschichtet.

10. Verfahren nach Anspruch 8,
**dadurch gekennzeichnet,**
**dass** der Zentrifugaldruck mindestens 30 % der Stärke a der umhüllenden Wand (3) entspricht.

11. Verfahren nach Anspruch 8,
**dadurch gekennzeichnet,**
**dass** die Silikonelastomerschicht (13) eine Stärke e von mindestens 3 mm sowie einen Wärmeausdehnungskoeffizient α von mindestens 1000 • 10⁻⁶/°C aufweist.

12. Verfahren nach einem der Ansprüche 8 bis 11,
**dadurch gekennzeichnet,**
**dass** das Herzstück (12) der Kerne (11) aus einem wasserlöslichen Material hergestellt ist, so dass es durch Auflösen mit Wasser aus den Hohlräumen (2) entfernt werden kann.

13. Verfahren nach Anspruch 12,
**dadurch gekennzeichnet,**
**dass** das Teil (1) ohne Öffnung in den umhüllenden Wänden (3, 3a, 3b, 3c) geformt wird, um das Umkleiden und das Formen zu vereinfachen.

14. Verfahren nach Anspruch 13,
**dadurch gekennzeichnet,**
**dass** die umhüllenden Wände (3) nach dem Formen durchbohrt werden, um das Entfernen der Kerne (11) durch Ausspülen zu ermöglichen.

15. Verfahren nach einem der Ansprüche 8 bis 14,
**dadurch gekennzeichnet,**
**dass** eine Gießform (20) mit der Form und den Abmessungen des kalten Kerns (11) verwendet wird und dass die Herstellung des Kerns (11) folgende Arbeitsschritte umfasst:
- Fertigung des Herzstücks (12),
- Einbringen des Herzstücks (12) in die Form (20), wobei Beilagen (25) aus netzförmigem Silikonelastomer zwischen dem Herzstück (12) und den Wänden (23) der Form (20) angeordnet werden, wobei jede Beilage (25) die Dicke e der an dieser Stelle herzustellenden Silikonelastomerschicht (13) aufweist,
- Gießen von flüssigem Silikonelastomer in den freigelassenen Zwischenraum (26),
- Kaltvernetzung des Silikonelastomers und Ausformen des Kerns (11).

## Claims

1. A process for making hollow objects of a hot polymerisable resin fibre composite material, said objects (1) consisting of enveloping walls (3) extending around and defining cavities (2), said process using a mould (7) having the external shape of the object (1), and notably comprising the following operations:
making a core (11) matching the shape of each cavity (2);
draping the cores (11) with at least one sheet of a resin fibre prepreg to form the composite material (6) of the object (1);
placing the assembled core (11) and composite material (6) in the mould (7); and
hot polymerising the resin,
said cores (11) exerting on the composite material (6) a centrifugal compression produced by thermal expansion during the polymerisation of the resin, said cores (11) comprising an inner body (12) coated with a silicone elastomer layer (13) having a high thermal heat expansion coefficient α and an appropriate thickness e;
**characterised in that** the silicone elastomer layer (13) has a decomposition temperature T below the hardening temperature T₁ of the resin in order to decompose the silicone elastomer layer (13) during polymerisation of the resin.

2. A process according to claim 1, **characterised in that** the centrifugal compression is at least equal to 30% of the thickness a of the composite material (6) before compression.

3. A process according to claim 1, **characterised in that** the silicone elastomer layer (13) has a thickness e of at least 3mm and a thermal expansion coefficient α of at least 1000.10⁻⁶/°C.

4. A process according to any of claims 1 to 3,
**characterised in that** the inner body (12) of the cores (11) is made of a water-soluble material in order that it can be removed from the cavities (2) by dissolution in water.

5. A process according to claim 4, **characterised in that** the object (1) is moulded without an aperture in the enveloping walls in order to simplify draping and moulding.

6. A process according to claim 5, **characterised in that** the enveloping walls (3) are pierced after moulding to enable the cores (11) to be removed by washing.

7. A process according to any of claims 1 to 6,
**characterised in that** a mould (20) matching the shape and dimensions of the core (11) when cold is used, and **in that** the making of the core (11) comprises the following operations:
making the inner body (12);
placing the inner body (12) in the mould (20);
shims (25) of cross-linked silicone elastomer being disposed between the inner body (12) and the mould walls (23), each shim (25) having the thickness which the silicone elastomer layer (13)is required to have in this region;
pouring liquid silicone elastomer into the free space (26); and
cold cross-linking the silicone elastomer and releasing the core (11) from the mould.

8. A process for making complex objects of a composite material, said objects (1) consisting of enveloping walls (3, 3a, 3b, 3c) extending around and defining cavities (2), said enveloping walls (3) themselves being adjacent non-enveloping walls (30), said process using a mould (7) having surfaces (10c) matching the shape of the non-enveloping walls (30), said mould (7) also being formed with recesses (31) matching the shape of the enveloping walls (3a, 3b), said process comprising the following operations:
draping the mould (7) with at least one sheet of a resin fibre prepreg forming a first layer (6a) of composite material;
placing cores (11) in the recesses (31) above the first layer (6a) of composite material;
draping the whole with at least one second sheet of resin fibre prepreg to form a second layer (6b) of composite material;
covering the assembled cores (11) and composite material (6a, 6b) with an impermeable film (32) which is hermetic in respect of the mould (7); and
hot compression and polymerisation in an autoclave; the cores (11) exerting on the composite material (6a) which is blocked by the lateral surfaces (10a) of the recess (31) a centrifugal compression produced by its thermal expansion during polymerisation of the resin, said cores (11) consisting of an inner body (12) coated with a layer of silicone elastomer (13) having a high thermal expansion coefficient and an appropriate thickness e,
**characterised in that** the silicone elastomer layer (13) has a decomposition temperature T below the hardening temperature T1 of the resin in order to decompose the silicone elastomer layer (13) during polymerisation of the resin.

9. A process according to claim 8, **characterised in that** the cores (11) are draped with at least one sheet of a resin fibre prepreg before placing said cores (11) in the recesses (31), in order to form a layer (6c) of composite material completely masking the cavities.

10. A process according to claim 8, **characterised in that** the centrifugal compression is at least equal to 30% of the thickness a of the enveloping wall (3).

11. A process according to claim 8, **characterised in that** the silicone elastomer layer (13) has a thickness e of at least 3 mm and a thermal expansion coefficient α of at least 1000.10⁻⁶/°C.

12. A process according to any of claims 8 to 11,
**characterised in that** the inner body (12) of the cores (11) is made of a water-soluble material to enable it to be removed from the cavities (2) by dissolution in water.

13. A process according to claim 12,**characterised in that** the object (1) is moulded without an aperture in the enveloping walls (3, 3a, 3b, 3c) to simplify draping and moulding.

14. A process according to claim 13, **characterised in that** the enveloping walls (3) are pierced after moulding to enable the cores (11) to be removed by washing.

15. A process according to any of claims 8 to 14,
**characterised in that** a mould (20) matching the shape and dimensions of the core (11) when cold is used, and **in that** the making of the core (11) comprises the following operations:
making the inner body (12);
placing the inner body (12) in the mould (20);
shims (25) which are made of a cross-linked silicone elastomer being disposed between the inner body (12) and the walls (23) of the mould (20), each shim (25) having the thickness e of the silicone elastomer layer (13) to be obtained in this region;
pouring liquid silicone elastomer into the free space (26); and
cold cross-linking the silicone elastomer and releasing the core (11) from the mould.
